# EUROPEAN PATENT APPLICATION

(11) **EP 4 570 747 A1**
(43) Date of publication of application: **18.06.2025**
(21) Application number: 24170603.5
(22) Date of filing: 16.04.2024
(51) Int. Cl.: C01B 25/16, C08K 5/5317, C08K 7/14, C08K 3/34, C08L 77/00

(54) **FLAME RETARDANT COMPOSITIONS, MASTERBATCHES, GLASS FIBER-NYLON COMPOSITIONS AND PREPARATION METHODS THEREOF**

(30) Priority: 15.12.2023 CN 202311730793
(71) Applicant: Baotou Research Institute of Rare Earths, Baotou, Inner Mongolia 014030 (CN)
(72) Inventor: YU, Xiaoli, Baotou, 014030 (CN); DOU, Wei, Baotou, 014030 (CN); CAO, Hongzhang, Baotou, 014030 (CN); TANG, Yu, Baotou, 014030 (CN); ZHOU, Xiaodong, Baotou, 014030 (CN); ZHAO, Lili, Baotou, 014030 (CN); LU, Tingting, Baotou, 014030 (CN); GUO, Liying, Baotou, 014030 (CN); CAO, Luya, Baotou, 014030 (CN); HAN, Dequan, Baotou, 014030 (CN); TIAN, Huhu, Baotou, 014030 (CN); WANG, Hui, Baotou, 014030 (CN); QI, Yuxuan, Baotou, 014030 (CN); GE, Ruixiang, Baotou, 014030 (CN); CHEN, Mingguang, Baotou, 014030 (CN); WU, Hao, Baotou, 014030 (CN); BAI, Xue, Baotou, 014030 (CN)
(74) Representative: Gong, Jinping

(57) **Abstract**

The present disclosure provides a flame retardant composition, masterbatch, glass fiber-nylon composition, and preparation method thereof. The flame retardant composition comprises 40-60 parts by weight of phosphonate, 5-15 parts by weight of an organosilicon flame retardant, and 2-8 parts by weight of an inorganic silicon synergist, wherein the phosphonate is prepared by a method comprising: (1) condensing a compound represented by formula (I) such that some of the compounds form a polymer, giving a partially condensed product; and (2) reacting a rare earth inorganic salt with the partially condensed product to form the phosphonate. The flame retardant composition can effectively improve the flame retardance of a glass fiber-nylon composite material, does not generate a toxic gas during its use, and does not bring about a difficulty in feeding and processing.

## Description

### TECHNICAL FIELD OF THE DISCLOSURE

The present disclosure relates to a flame retardant composition, masterbatch, glass fiber-nylon composition, and preparation method thereof.

### BACKGROUND OF THE DISCLOSURE

Phosphorus-based flame retardants do not contain halogen, have high flame-retardant efficiency and favorable electrical properties, and are widely used in the flame retardant modification of glass-fiber reinforced nylon. Aluminum diethylphosphinate, as a typical flame retardant, has poor oxidation resistance, and is prone to color change, fuming, and even burning in air environments and at high temperatures. Because aluminum diethylphosphinate is usually added in a large amount and its powder has a small particle size, there arise problems such as bridging during its adding, uneven feeding, and easy strip breaking during the granulation.

CN114672157A discloses a halogen-free flame retardant masterbatch for glass fiber reinforced nylon, comprising nylon and a flame retardant, wherein the flame retardant is prepared by mixing ammonium polyphosphate and trimethylphenyl phosphate at a weight ratio of 1: 3. While being used to prepare glass fiber reinforced nylon, the flame retardant masterbatch easily releases a toxic gas and generates bridging and other phenomena.

CN1763132A discloses a flame retardant thermoplastic polyester resin composition. It is polyester resin-instead of nylon-that is the polymer of the composition.

CN 114364729A discloses a flame retardant composition comprising a) hypophosphite, and b) a metal complex comprising a metal Me selected from the group consisting of Cu, Mg, Ca, Zn, Mn, Fe, Co, Ni, Ti, Al, Sb, La, and Ce, a hydroxyl ligand, and a phosphorus-containing organic ligand. The flame retardant composition easily releases a toxic gas during use.

### SUMMARY OF THE DISCLOSURE

In view of the above, one objective of the present disclosure is to provide a flame retardant composition that can effectively improve the flame retardance of a glass fiber-nylon composite material, does not generate a toxic gas during its use, and does not bring about a difficulty in feeding and processing. Further, the flame retardant composition has little influence on the mechanical properties of the glass fiber-nylon composite material. Still further, the flame retardant composition, when applied to the glass fiber-nylon composite material, does not cause the migration phenomenon, and hardly corrodes equipment. Another objective of the present disclosure is to provide a method for preparing a flame retardant composition. Still another objective of the present disclosure is to provide a flame retardant masterbatch. Still another objective of the present disclosure is to provide a glass fiber-nylon composition. The above objectives are accomplished by technical solutions described below.

A first aspect of the present disclosure is to provide a flame retardant composition, comprising 40-60 parts by weight of phosphonate, 5-15 parts by weight of an organosilicon flame retardant, and 2-8 parts by weight of an inorganic silicon synergist,
wherein the phosphonate is prepared by a method comprising:
(1) condensing a compound represented by formula (I) such that some of the compounds form a polymer, giving a partially condensed product 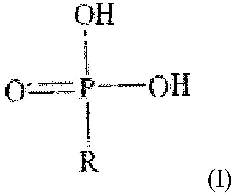 where R is selected from a C1-C6 alkyl group, or a substituted or unsubstituted phenyl group; and
(2) reacting a rare earth inorganic salt with the partially condensed product to form the phosphonate.

In the flame retardant composition according to the present disclosure, the organosilicon flame retardant is preferably selected from one or more of a ladder-like siloxane, a caged silsesquioxane, and a silicone rubber; the inorganic silicon synergist is selected from one or more of wollastonite, layered silicate, a silica nanoparticle, and a glass powder.

In the flame retardant composition according to the present disclosure, the inorganic silicon synergist is preferably an inorganic silicon synergist modified by a silane coupling agent, and the silane coupling agent is a single-ended reactive polysiloxane coupling agent.

A second aspect of the present disclosure is to provide a method for preparing the flame retardant composition described above, comprising:
(1) condensing a compound represented by formula (I) in the presence of and an inorganic acid and acetic anhydride such that some of the compounds form a polymer, giving a partially condensed product 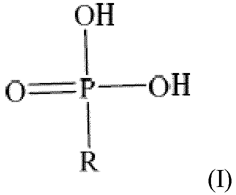 where R is selected from a C1-C6 alkyl group, or a substituted or unsubstituted phenyl group;
(2) reacting a rare earth inorganic salt with the partially condensed product to form phosphonate; and
(3) mixing a raw material comprising 40-60 parts by weight of phosphonate, 5-15 parts by weight of an organosilicon flame retardant, and 2-8 parts by weight of an inorganic silicon synergist to form the flame retardant composition.

In the method of the present disclosure, the molar ratio of the compound represented by formula (I) to acetic anhydride is preferably (0.2-0.4): (0.1-0.3); the mass ratio of the compound represented by formula (I) to the inorganic acid is preferably 1: (1-5); the molar ratio of the compound represented by formula (I) to the rare earth element in the rare earth inorganic salt is preferably (0.2-0.4): (0.08-0.35).

In the method of the present disclosure, step (1) is preferably condensing a compound represented by formula (I) at 110-150 °C for 5-15 h in the presence of an inorganic acid and acetic anhydride; step (2) is preferably reacting a rare earth inorganic salt with the partially condensed product at 70-110 °C for 2-10 h.

A third aspect of the present disclosure is to provide a flame retardant masterbatch, comprising 25-40 parts by weight of first nylon and 50-75 parts by weight of the flame retardant composition described above.

The flame retardant masterbatch according to the present disclosure preferably further comprises 0.5- 5 parts by weight of a lubricant and 0.1-3 parts by weight of an antioxidant; the first nylon is obtained by polymerizing a diamine having 5 to 18 carbon atoms and a dibasic acid having 5 to 18 carbon atoms, or by polymerizing a polyamide having 5 to 15 carbon atoms; the lubricant is selected from one or more of aluminum stearate, lithium stearate, calcium stearate, magnesium stearate, a silicone powder, polyamide wax, Montan wax, ethylene bis stearamide, pentaerythritol stearate, and Lubricant TAF; the antioxidant is selected from one or more of a phenolic antioxidant, a phosphorus-based antioxidant, a thioether-based antioxidant, and a metal salt antioxidant.

A fourth aspect of the present disclosure is to provide a glass fiber-nylon composition prepared from a raw material comprising 1-8 parts by weight of second nylon, 0.5-6 parts by weight of a glass fiber, and 0.5-5 parts by weight of the flame retardant masterbatch described above.

In the glass fiber-nylon composition according to the present disclosure, the raw material preferably further comprises 0.1-2 parts by weight of an additive, wherein the additive is selected from one or more of an antioxidant, a lubricant, a stabilizer, and a preservative.

The flame retardant composition according to the present disclosure can effectively improve the flame retardance of a glass fiber-nylon composite material, does not generate a toxic gas during its use, and does not bring about a difficulty in feeding and processing. Further, the flame retardant composition has little influence on the mechanical properties of the glass fiber-nylon composite material. Still further, the flame retardant composition, when applied to the glass fiber-nylon composite material, does not cause the migration phenomenon, and hardly corrodes equipment.

### BRIEF SUMMARY OF THE DRAWINGS

Fig. 1 shows an XRD pattern of the phosphonate obtained from Preparation Example 1 and its XRD patterns after it was subjected to treatment at different temperatures.
Fig. 2 shows an ion mass spectrogram of the partially condensed product obtained from Preparation Example 1.
Fig. 3 shows an XRD pattern of the phosphonate obtained from Preparation Example 2 and its XRD patterns after it was subjected to treatment at different temperatures.
Fig. 4 shows an XRD pattern of the phosphonate obtained from Preparation Example 3 and its XRD patterns after it was subjected to treatment at different temperatures.
Fig. 5 shows an XRD pattern of the phosphonate obtained from Preparation Example 4 and its XRD patterns after it was subjected to treatment at different temperatures.
Fig. 6 shows an XRD pattern of the phosphonate obtained from Preparation Example 5 and its XRD patterns after it was subjected to treatment at different temperatures.

### DETAIL DESCRIPTION OF THE DISCLOSURE

The following is a further description of the present disclosure by means of embodiments, but the present disclosure is not limited to the embodiments.

In the present disclosure, "first nylon" and "second nylon" both refer to nylon. The expressions "first" and "second" are used to distinguish them from each other, having no other meanings.

### <Flame Retardant Composition and Preparation Method>

The flame retardant composition of the present disclosure comprises phosphonate, an organosilicon flame retardant, and an inorganic silicon synergist. The flame retardant composition of the present disclosure does not contain a nitrogen-based flame retardant. In some embodiments, the flame retardant composition consists of phosphonate, an organosilicon flame retardant, and an inorganic silicone synergist. In the present disclosure, the phosphonate may also be referred to as an organophosphorus metal salt, such as an organophosphorus rare earth salt.

The phosphonate in the present disclosure is prepared by a method comprising:
(1) condensing a compound represented by formula (I) such that some of the compounds form a polymer, giving a partially condensed product 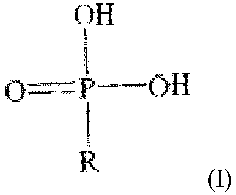 where R is selected from a C1-C6 alkyl group, or a substituted or unsubstituted phenyl group; and
(2) reacting a rare earth inorganic salt with the partially condensed product to form the phosphonate.

In the present disclosure, merely filtering, washing, and drying the product of reacting the rare earth inorganic salt with the partially condensed product results in the phosphonate, which dispenses with treatment such separation and purification. That is the reason why using a preparation method to characterize the phosphonate of the present disclosure is more appropriate. It is found by the present disclosure that the phosphonate of the present disclosure works better in improving the flame retardance of nylon.

The organosilicon flame retardant can be selected from one or more of a ladder-like siloxane, a caged silsesquioxane, and a silicone rubber. A ladder-like siloxane is preferable. Examples of the ladder-like siloxane include, but are not limited to, ladder-like phenylsiloxane, ladder-like methylsiloxane, and ladder-like methylphenylsiloxane. According to one embodiment of the present disclosure, the organosilicon flame retardant is a product with the model No. FCA-107, manufactured by Dow Corning.

The amount of the organosilicon flame retardant is 5-15 parts by weight, preferably 7-13 parts by weight, and more preferably 10-12 parts by weight.

The inorganic silicon synergist is selected from one or more of wollastonite, layered silicate, a silica nanoparticle, and a glass powder. The glass powder is preferably a low melting point glass powder. In some embodiments, the inorganic silicon synergist is wollastonite. In other embodiments, the inorganic silicon synergist is layered silicate. Examples of layered silicate include, but are not limited to, sepiolite, mica, and talc. In some embodiments, the inorganic silicon synergist is a composition of sepiolite, mica, and talc. The mass ratio between sepiolite, talc, and muscovite is (2-8): 1: (0.2-0.8), and preferably (4-6): 1: (0.4-0.6).

The amount of the inorganic silicon synergist is 2-8 parts by weight, preferably 3-7 parts by weight, and more preferably 4-6 parts by weight.

The inorganic silicon synergist can be an inorganic silicon synergist modified by a silane coupling agent. The silane coupling agent can be a single-ended reactive polysiloxane coupling agent. The silane coupling agent may be selected from one or more of a butyl-terminated reactive polysiloxane coupling agent and a hydroxyalkyl-terminated reactive polysiloxane coupling agent. According to one embodiment of the present disclosure, the silane coupling agent is a product with the model No. FM-0815J, purchased from JNC Corporation.

Specifically, an inorganic silicon synergist modified by a silane coupling agent can be obtained by mixing an inorganic silicon synergist with a silane coupling agent. The mass ratio of the inorganic silicon synergist to the silane coupling agent can be 1: (1-5), and preferably 1: (1.5-3).

The flame retardant composition of the present disclosure can be prepared by a method comprising:
(1) a condensation step;
(2) a step of reacting a rare earth inorganic salt with a partially condensed product; and
(3) a mixing step.

In the present disclosure, forming a partially condensed product from a compound represented by formula (I) enables the compound represented by formula (I) to be more compatible with a rare earth cation, enables the resulting organic rare earth salt be more stable and more resistant to high temperatures, enables precipitation to less occur, and enables the resulting phosphonate be good in flame retardance.

### Condensation step

In the present disclosure, a phosphonic acid-based compound is condensed such that some of the compounds turn into a polymer, thereby giving a partially condensed product.

The compound is represented by formula (I): 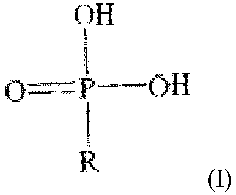 where R is selected from a C1-C6 alkyl group, or a substituted or unsubstituted phenyl group. Preferably, R is selected from a C1-C3 alkyl group or a phenyl group. The phenyl group can be substituted with a C1-C6 alkyl group, and preferably a C1-C3 alkyl group.

Examples of the alkyl group include, but are not limited to, methyl, ethyl, propyl, isopropyl, butyl, methylpropyl, amyl, methylbutyl, dimethylpropyl, ethylpropyl, hexyl, methylpentyl, dimethylbutyl, ethylbutyl, cyclopropyl, and cyclopentyl.

Condensing a compound represented by formula (I) can be carried out in the presence of an inorganic acid and acetic anhydride. In some embodiments, the inorganic acid is acetic acid.

The molar ratio of the compound represented by formula (I) to acetic anhydride can be (0.2-0.4): (0.1-0.3), preferably (0.25-0.35): (0.12-0.25), and more preferably (0.3-0.35): (0.13-0.2).

The mass ratio of the compound represented by formula (I) to acetic anhydride can be 1: (0.2-1.5), preferably 1: (0.4-1), and more preferably 1: (0.5-0.7).

When the amount of the compound represented by formula (I) and that of acetic anhydride fall within the above ranges, the partially condensed product has an appropriate degree of polymerization that makes the compound represented by formula (I) more compatible with a rare earth ion.

The mass ratio of the inorganic acid to acetic anhydride is (1.5-8): 1, preferably (2-6): 1, and more preferably (3-4): 1.

The reaction in step (1) is carried out at a temperature of 110-150 °C, and preferably 120-140 °C. The reaction is carried out for 5-15 h, and preferably 7-10 h.

Specifically, a compound represented by formula (I) is added to a mixed solution containing an inorganic acid and acetic anhydride, and the condensation reaction is carried out to give a partially condensed product.

### Step of reacting rare earth inorganic salt with partially condensed product

Reacting a rare earth inorganic salt with the partially condensed product results in phosphonate. Specifically, a rare earth inorganic salt is added to the partially condensed product. A rare earth inorganic salt can be added in batches to the partially condensed product.

The rare earth element in the rare earth inorganic salt can be selected from one or more of lanthanum, cerium, praseodymium, neodymium, promethium, samarium, europium, gadolinium, terbium, dysprosium, holmium, erbium, thulium, ytterbium, lutetium, scandium, and yttrium. Preferably, the rare earth element is selected from one or more of lanthanum or cerium. The rare earth inorganic salt can be selected from one or more of rare earth acetate, rare earth chloride, and rare earth carbonate. In some embodiments, the rare earth element is lanthanum and cerium. The molar ratio of lanthanum to cerium is 25: (50-100), and preferably 25: (65-85).

The molar ratio of the compound represented by formula (I) to the rare earth element in the rare earth inorganic salt is (0.2-0.4): (0.08-0.35), preferably (0.25-0.35): (0.12-0.3), and more preferably (0.3-0.35): (0.15-0.3).

The reaction in step (2) is carried out at a temperature of 70-110 °C, and preferably 80-100 °C. The reaction is carried out for 2-10 h, and preferably 4-7 h.

The amount of the phosphonate is 40-60 parts by weight, preferably 45-55 parts by weight, and more preferably 50-55 parts by weight.

### Mixing step

Mixing a raw material comprising the phosphonate, an organosilicon flame retardant, and an inorganic silicon synergist results in the flame retardant composition. The types and proportions of the respective components are as described above. The mixing can be carried out in a high-speed mixer.

### <Flame Retardant Masterbatch and Preparation Method>

The flame retardant masterbatch of the present disclosure comprises first nylon and a flame retardant composition. In some embodiments, it further comprises a lubricant and an antioxidant. The flame retardant masterbatch of the present disclosure can be composed of only the above substances. There is hereinbefore a description of the components of the flame retardant composition, and no repetition of it is needed here.

The first nylon can be obtained by polymerizing a diamine having 5 to 18 carbon atoms and a dibasic acid having 5 to 18 carbon atoms, or by polymerizing a polyamide having 5 to 15 carbon atoms.

The diamine having 5 to 18 carbon atoms can be an aliphatic diamine or aromatic diamine. Preferably, the aliphatic diamine has 6 to 15 carbon atoms. Examples of the aliphatic diamine include, but are not limited to, hexanediamine, heptanediamine, octyldiamine, nonylenediamine, decanediamine, undecylenediamine, dodecylenediamine, tridecylenediamine, tetradecylenediamine, and pentadecylenediamine. Preferably, the aromatic diamine has 8 to 16 carbon atoms. Examples of the aromatic diamine include, but are not limited to, m-phenylene dimethylamine, p-phenylene dimethylamine, m-phenylene diethylamine, and p-phenylene diethylamine.

Preferably, the dibasic acid has 6 to 15 carbon atoms. The dibasic acids can be an aliphatic dibasic acid or aromatic dibasic acid. Examples of the dibasic acid include, but are not limited to, adipic acid, pimelic acid, octanedioic acid, azelaic acid, sebacic acid, undecanedioic acid, dodecanedioic acid, tridecanedioic acid, tetradecanedioic acid, and pentadecanedioic acid.

Preferably, the polyamide has 6 to 12 carbon atoms. Examples of the polyamide include, but are not limited to, polycaprolactam, polyundecanlactam, and polydodecanlactam.

Examples of the first nylon include, but are not limited to, PA6, PA66, PA12, PA1315, and PAMXD6.

The amount of the first nylon is 25-40 parts by weight, preferably 30-35 parts by weight, and more preferably 32-35 parts by weight.

The amount of the flame retardant composition is 50-75 parts by weight, preferably 55-70 parts by weight, and more preferably 60-65 parts by weight.

The lubricant can be selected from one or more of aluminum stearate, lithium stearate, calcium stearate, magnesium stearate, a silicone powder, polyamide wax, Montan wax, ethylene bis stearate amide, pentaerythritol stearate, and Lubricant TAF. According to one embodiment of the present disclosure, the lubricant is a mixture of lithium stearate and a silicone powder. The mass ratio of lithium stearate to the silicone powder can be 1: (0.5-2), and preferably 1: (0.8-1.5).

The amount of the lubricant is 0.5-5 parts by weight, preferably 1-4 parts by weight, and more preferably 2-3 parts by weight.

The antioxidant can be selected from one or more of a phenolic antioxidant, phosphorus-based antioxidant, thioether-based antioxidant, and metal salt antioxidant. Examples of the antioxidant include, but are not limited to, N,N'-bis-(3-(3,5-di-tert-butyl-4-hydroxyphenyl)propionyl)hexanediamine (Antioxidant 1098), pentaerythritol tetrakis[3-[3,5-di-tert-butyl-4-hydroxyphenyl]propionate (Antioxidant 1010), octadecyl 3-(3,5-di-tert-butyl-4-hydroxyphenyl)propanoate (Antioxidant 1076), tris(2,4-di-tert-butylphenyl) phosphite (Antioxidant 168), bis(2,4-di-tert-butyl)pentaerythritol diphosphate (Antioxidant 626), dilauryl thiodipropionate (Antioxidant DLTP), and distearyl thiodipropionate (Antioxidant DSTP).

The amount of the antioxidant is 0.1-3 parts by weight, preferably 0.5-2.5 parts by weight, and more preferably 1-2 parts by weight.

A raw material comprising first nylon, a flame retardant composition, a lubricant, and an antioxidant is melt-extruded in a screw extruder to obtain a flame retardant masterbatch. Specifically, first nylon and an antioxidant are well mixed and added to a screw extruder, and then a flame retardant composition and a lubricant that are well mixed are added to the screw extruder. The screw extruder is preferably a twin-screw extruder.

The temperature of the screw extruder is set at 150-230 °C, preferably 170-210 °C, and more preferably 180-200 °C.

The speed of the screw is set at 150-220 rpm.

Some embodiments further comprise the steps of cooling, pelletizing, sieving, and drying the extruded material.

### <Glass Fiber-Nylon Composition and Preparation Method>

The glass fiber-nylon composition of the present disclosure comprises a flame retardant masterbatch, second nylon, and a glass fiber. In some embodiments, it further comprises an additive. The glass fiber-nylon composition of the present disclosure can be composed of only the above components.

There is hereinbefore a description of the flame retardant masterbatch, and no repetition of it is needed here.

The amount of the flame retardant masterbatch is 0.5-5 parts by weight, preferably 1-4 parts by weight, and more preferably 2-3 parts by weight.

The second nylon can be obtained by polymerizing a diamine having 5 to 18 carbon atoms and a dibasic acid having 5 to 18 carbon atoms, or by polymerizing a polyamide having 5 to 15 carbon atoms.

The diamine having 5 to 18 carbon atoms can be an aliphatic diamine or aromatic diamine. Preferably, the aliphatic diamine has 6 to 15 carbon atoms. Examples of the aliphatic diamine include, but are not limited to, hexanediamine, heptanediamine, octyldiamine, nonylenediamine, decanediamine, undecylenediamine, dodecylenediamine, tridecylenediamine, tetradecylenediamine, and pentadecylenediamine. Preferably, the aromatic diamine has 8 to 16 carbon atoms. Examples of the aromatic diamine include, but are not limited to, m-phenylene dimethylamine, p-phenylene dimethylamine, m-phenylene diethylamine, and p-phenylene diethylamine.

Preferably, the dibasic acid has 6 to 15 carbon atoms. The dibasic acid can be an aliphatic dibasic acid or aromatic dibasic acid. Examples of the dibasic acid include, but are not limited to, adipic acid, pimelic acid, octanedioic acid, azelaic acid, sebacic acid, undecanedioic acid, dodecanedioic acid, tridecanedioic acid, tetradecanedioic acid, and pentadecanedioic acid.

Preferably, the polyamide has 6 to 12 carbon atoms. Examples of the polyamide include, but are not limited to, polycaprolactam, polyundecanlactam, and polydodecanlactam.

Examples of the second nylon include, but are not limited to, PA6, PA66, PA12, PA1315, and PAMXD6.

The amount of the second nylon is 1-8 parts by weight, preferably 2-6 parts by weight, and more preferably 4-5 parts by weight.

The amount of the glass fiber is 0.5-6 parts by weight of, preferably 1-5 parts by weight, and more preferably 2-4 parts by weight.

The additive can be selected from one or more of an antioxidant, lubricant, stabilizer, and preservative. Preferably, the additive is an antioxidant. The antioxidant can be selected from one or more of a phenolic antioxidant, phosphorus-based antioxidant, and thioether-based antioxidant. Examples of the phenolic antioxidant include, but are not limited to, N,N'-bis-(3-(3,5-di-tert-butyl-4-hydroxyphenyl)propionyl)hexanediamine (Antioxidant 1098), pentaerythritol tetrakis[3-[3,5-di-tert-butyl-4-hydroxyphenyl]propionate (Antioxidant 1010), octadecyl 3-(3,5-di-tert-butyl-4-hydroxyphenyl)propanoate (Antioxidant 1076), tris(2,4-di-tert-butylphenyl) phosphite (Antioxidant 168), bis(2,4-di-tert-butyl)pentaerythritol diphosphate (Antioxidant 626), and Antioxidant 627. Examples of the thioether-based antioxidant include, but are not limited to, dilauryl thiodipropionate (Antioxidant DLTP) and distearyl thiodipropionate (Antioxidant DSTP). According to one embodiment of the present disclosure, the additive is tris(2,4-di-tert-butylphenyl) phosphite (Antioxidant 168).

The amount of the additive can be 0.1-2 parts by weight, preferably 0.3-1.5 parts by weight, and more preferably 0.5-0.8 part by weight.

A raw material comprising a flame retardant masterbatch, second nylon, a glass fiber, and an additive is extruded and granulated in an extruder to obtain a glass fiber-nylon composition. The raw material used in the Examples and Comparative Examples is described as follows:
In lanthanum cerium carbonate, lanthanum and cerium are present at a molar ratio of 25: 75.

The layered silicate is a composition of a sepiolite micropowder, a talc powder, and a muscovite powder at a mass ratio of 5: 1: 0.5.

The silane coupling agent is a product with the model No. FM-0815J, purchased from JNC Corporation.

The organosilicon flame retardant is a product with the model No. FCA-107, purchased from Dow Corning.

The silicone powder is a product with the model No. KJ-B01, purchased from Hangzhou Kaijie Plastic Technology Co., Ltd.

The glass fiber is a product with the model No. T-435N, purchased from Taishan Glass Fiber Co., Ltd.

The additive is Antioxidant 168.
The testing method is described as follows:
The tensile strength is measured using the method specified in ISO527-1-2012.

The impact strength herein is notched impact strength measured using the method specified in ISO179-1-2010.

To test the flame retardancy, the first step is to prepare a 125 mm × 13 mm × 0.8 mm sample by injection molding, and the sample is then subjected to vertical testing according to the UL-94 standard:
1) Clamping: Clamp the sample from its upper end by 6 mm while keeping its length direction down, and let the distance between the lower end of the sample to the upper surface of the preset cotton pad be 300 ± 10 mm.
2) Burner: The flow rate of methane is set at 105 ml/min, and the back pressure is set at a 10 mm water-column height, so that the flame has a height of 20 ± 1 mm.
3) Combustion: Apply the flame center of the burner to the midpoint of the bottom edge of the sample for 10 ± 0.5 seconds while keeping the distance between the top of the burner and the lower end of the sample to be 10 ± 1 mm. If the shape and position of the sample change during the combustion, the burner should be adjusted accordingly. If there is dripping from the sample during the testing, the burner can be tilted to 45°. After burning has continued for 10 ± 0.5 seconds, remove the burner at a speed of 300 mm/min to a distance of at least 150 mm. At this time, the sample is likely still flaming. When the flaming stops, record this time as ti. Reapply the burner for another 10 ± 0.5 seconds immediately after the flaming stops. After removing the burner for the second time, record the flaming time as t₂. Watch for the end of glowing, and record the glowing time as t₃.

Migration: Put a sample of the glass fiber-nylon composition (10 mm × 16 mm × 80 mm) into a constant temperature and humidity chamber (with the temperature and relative humidity set at 85 °C and 85%), and 168 h later, watch for the surface state of the sample.

Corrosion: Put a sample of the glass fiber-nylon composition (50 mm × 50 mm) into a glass beaker, insert a 2 cm × 2 cm copper sheet in the middle of the sample, and then put them into a constant temperature and humidity chamber (with the temperature and relative humidity set at 85 °C and 85%). 168 h later, watch for the corrosion state on the surface of the copper sheet.

### Preparation Example 1

Add 15 g of acetic anhydride to 52.7 g of acetic acid, to which 28.8 g of methylphosphonic acid were added. Let the reaction proceed at 130 °C for 8 h, and lower the temperature to 80 °C to obtain a partially condensed product.

Add 52.5 g of lanthanum acetate in batches to the partially condensed product to form a white precipitate. After completing the addition of lanthanum acetate, let the reaction proceed at 80 °C under stirring for 5 h to obtain a reaction product. Filtering, washing, and drying the reaction product resulted in phosphonate.

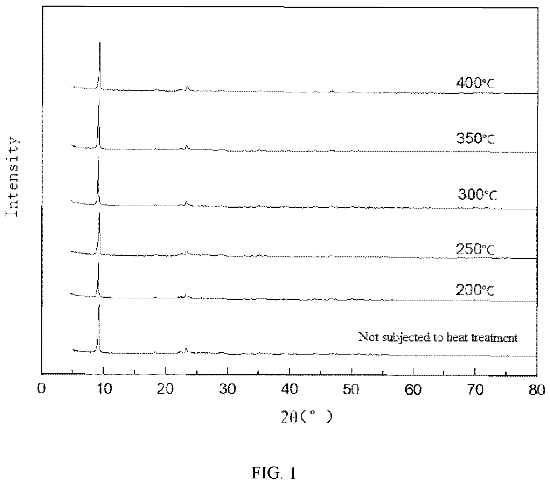

Fig. 1 shows an XRD pattern of the phosphonate obtained from Preparation Example 1 and its XRD patterns after it was subjected to treatment at different temperatures for 120min. As can be seen from Fig. 1, the phosphonate prepared in Preparation Example 1 has good thermal stability.

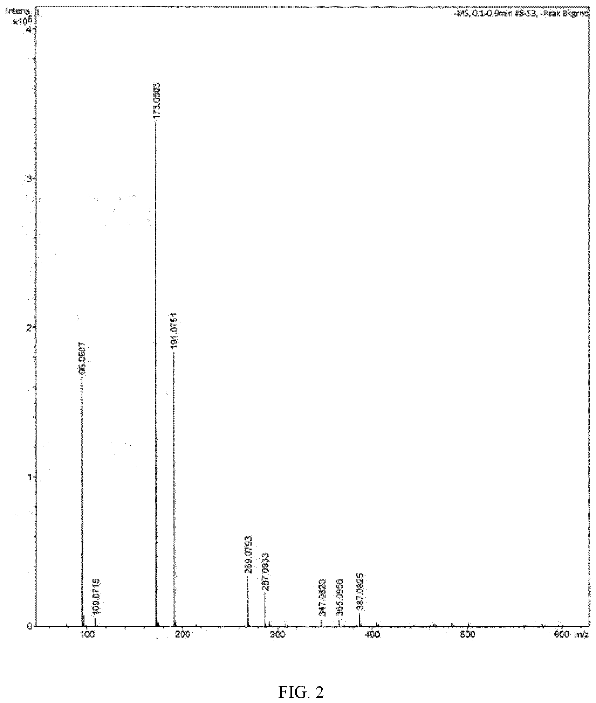

Fig. 2 shows an ion mass spectrogram of the partially condensed product obtained from Preparation Example 1. As can be seen from Fig. 2, the partially condensed product contains free methylphosphonic acid and a polycondensate of methylphosphonic acid.

### Preparation Example 2

Add 15 g of acetic anhydride to 52.7 g of acetic acid, to which 28.8 g of methylphosphonic acid were added. Let the reaction proceed at 130 °C for 8 h, and lower the temperature to 90 °C to obtain a partially condensed product.

Add 62 g of cerium chloride in batches to the partially condensed product to form a white precipitate. After completing the addition of cerium chloride, let the reaction proceed at 90 °C under stirring for 5 h to obtain a reaction product. Filtering, washing, and drying the reaction product resulted in phosphonate.

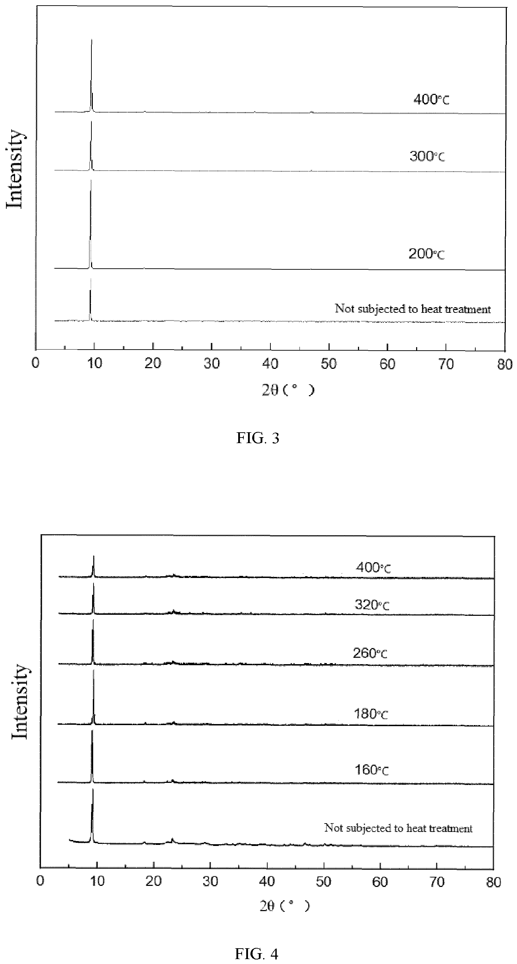

Fig. 3 shows an XRD pattern of the phosphonate obtained from Preparation Example 2 and its XRD patterns after it was subjected to treatment at different temperatures for 120min. As can be seen from Fig. 3, the phosphonate prepared in Preparation Example 2 has good thermal stability.

### Preparation Example 3

Add 24 g of acetic anhydride to 52.7 g of acetic acid, to which 28.8 g of methylphosphonic acid were added. Let the reaction proceed at 130 °C for 8 h, and lower the temperature to 90 °C to obtain a partially condensed product.

Add 42 g of lanthanum acetate in batches to the partially condensed product to form a white precipitate. After completing the addition of lanthanum acetate, let the reaction proceed at 90 °C under stirring for 5 h to obtain a reaction product. Filtering, washing, and drying the reaction product resulted in phosphonate.

Fig. 4 shows an XRD pattern of the phosphonate obtained from Preparation Example 3 and its XRD patterns after it was subjected to treatment at different temperatures for 120 min. As can be seen from Fig. 4, the phosphonate prepared in Preparation Example 3 has good thermal stability.

### Preparation Example 4

Add 15 g of acetic anhydride to 90 g of acetic acid, to which 28.8 g of methylphosphonic acid were added. Let the reaction proceed at 130 °C for 8 h, and lower the temperature to 90 °C to obtain a partially condensed product.

Add 38.4 g of lanthanum cerium carbonate in batches to the partially condensed product to form a white precipitate. After completing the addition of lanthanum cerium carbonate, let the reaction proceed at 90 °C under stirring for 5 h to obtain a reaction product. Filtering, washing, and drying the reaction product resulted in phosphonate.

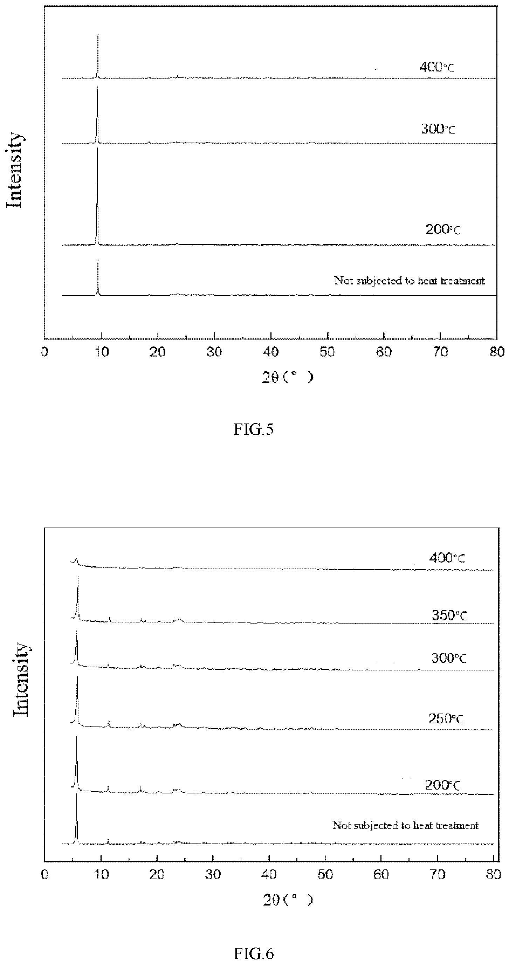

Fig. 5 shows an XRD pattern of the phosphonate obtained from Preparation Example 4 and its XRD patterns after it was subjected to treatment at different temperatures for 120min. As can be seen from Fig. 5, the phosphonate prepared in Preparation Example 4 has good thermal stability.

### Preparation Example 5

Add 15 g of acetic anhydride to 90 g of acetic acid, to which 48 g of phenylphosphonic acid were added. Let the reaction proceed at 130 °C for 8 h, and lower the temperature to 90 °C to obtain a partially condensed product.

Add 52 g of lanthanum acetate in batches to the partially condensed product to form a white precipitate. After completing the addition of lanthanum acetate, let the reaction proceed at 90 °C under stirring for 5 h to obtain a reaction product. Filtering, washing, and drying the reaction product resulted in phosphonate.

Fig. 6 shows an XRD pattern of the phosphonate obtained from Preparation Example 5 and its XRD patterns after it was subjected to treatment at different temperatures for 120 min. As can be seen from Fig. 6, the phosphonate prepared in Preparation Example 5 has good thermal stability.

Table 1 summarizes data obtained from thermogravimetric analysis graphs of the phosphonate obtained from Preparation Examples 1 to 5.

**Table 1**

| | Prep. Ex. 1 | Prep. Ex. 2 | Prep. Ex. 3 | Prep. Ex. 5 |
|---|---|---|---|---|
| Tc (°C) | 533.8 | - | 475.9 | 456.5 |
| Te (°C) | 581.4 | 476.0 | 554.7 | 476.6 |
| Ti (°C) | 623.4 | 498.5 | 633.3 | 499.8 |
| Temp. at which the sample lost 0.1 % of its weight (°C) | 465.1 | 433.9 | 357.1 | 423.3 |
| Temp. at which the sample lost 0.5 % of its weight (°C) | 470.9 | 440.2 | 367.0 | 429.3 |
| Temp. at which the sample lost 1.0 % of its weight (°C) | 477.8 | 447.1 | 377.8 | 438.2 |
| Temp. at which the sample lost 5.0 % of its weight (°C) | 548.6 | 479.3 | 429.2 | 474.0 |
| Temp. at which the sample lost 10.0 % of its weight (°C) | 581.8 | 496.0 | 466.1 | 488.2 |
| Temp. at which the sample lost 50.0 % of its weight (°C) | - | - | 635.1 | 659.2 |

### Examples 1 and 2

Place an inorganic silicon synergist into a high-speed mixer, and then add the silane coupling agent to the high-speed mixer to obtain a silane coupling agent modified inorganic silicon synergist. The mass ratio of the inorganic silicon synergist to the silane coupling agent was 1: 2.

Mix 50 parts by weight of the phosphonate, 10 parts by weight of the organosilicon flame retardant, and 5 parts by weight of the silane coupling agent modified inorganic silicon synergist to obtain a flame retardant composition.

The phosphonate and the inorganic silicon synergists used in Examples 1 and 2 are shown in Table 2.

**Table 2**

| Materials | Ex. 1 | Ex. 2 |
|---|---|---|
| Phosphonate | Prep. Ex. 1 | Prep. Ex. 1 |
| Inorganic silicon synergist | layered silicate | wollastonite powder |

### Comparative Example 1

This comparative example was the same as Example 1, except that the phosphonate was replaced with aluminum diethylphosphinate.

### Comparative Example 2

This comparative example was the same as Example 2, except that the phosphonate was replaced with aluminum diethylphosphinate and melamine polyphosphate (MPP) mixed at a mass ratio of 3: 1.

### Examples 3 and 4 & Comparative Examples 3 and 4

Mix 32 parts by weight of first nylon and 1 part by weight of N,N'-bis-(3-(3,5-di-tert-butyl-4-hydroxyphenyl)propionyl)hexanediamine (Antioxidant 1098) and place them into a twin-screw extruder. Mix 65 parts by weight of a flame retardant composition, 1 part by weight of the silicone powder, and 1 part by weight of lithium stearate, and place them into the twin-screw extruder.

Melt-extrude the material in the twin-screw extruder. Cool, pelletize, sieve, and dry the extruded material to obtain a flame retardant masterbatch. The extruder was divided into 12 zones by temperature, with the die being the 12th zone. The temperatures in the first to eleventh zones were 180 °C, 200 °C, 200 °C, 200 °C, 200 °C, 200 °C, 190 °C, 190 °C, 190 °C, 180 °C, and 180 °C respectively. The temperature of the die was 200 °C. The speed of the screws was 150-220 rpm.

The first nylon and the flame retardant compositions used in Examples 3 and 4 and Comparative Examples 3 and 4 are shown in Table 3.

**Table 3**

| Material | Ex. 3 | Ex. 4 | Com. Ex. 3 | Com. Ex. 4 |
|---|---|---|---|---|
| First nylon | PA6 | PA 12 | PA6 | PA6 |
| Flame retardant composition | Ex. 1 | Ex. 2 | Com. Ex. 1 | Com. Ex. 2 |

### Examples 5 and 6 & Comparative Examples 5 and 6

Mix 2.5 parts by weight of a flame retardant masterbatch, 4.5 parts by weight of nylon 66, 3 parts by weight of a glass fiber, and 0.5 parts by weight of the additive, and place them into a twin-screw extruder for extrusion and granulation. Sieve and dry the granulated material to obtain a glass fiber-nylon composition. The extruder was divided into 12 zones by temperature, with the die being the 12th zone. The temperatures in the first to eleventh zones were 180 °C, 200 °C, 200 °C, 200 °C, 200 °C, 200 °C, 190 °C, 190 °C, 190 °C, 180 °C, and 180 °C respectively. The temperature of the die was 200 °C. The speed of the screws was 150-220 rpm.

The flame retardant masterbatch, the properties of the glass fiber-nylon composition, and the phenomena occurring during processing are shown in Table 4.

**Table 4**

| | Ex. 5 | Ex. 6 | Com. Ex. 5 | Com. Ex. 6 |
|---|---|---|---|---|
| Flame retardant masterbatch | Ex. 3 | Ex. 4 | Com. Ex. 3 | Com. Ex. 4 |
| Material feeding | Smooth | Smooth | Smooth | Bridging |
| Gas emission in processing | No | No | Slight | Slight |
| Tensile strength (MPa) | 110 | 101 | 115 | 92 |
| Impact strength (MPa) | 9.2 | 9.6 | 10 | 9.5 |
| UL94 (0.8 mm) | V-0 | V-0 | V-0 | V-0 |
| Migration | No | No | No | No |
| Corrosion | No | No | No | No |

The present disclosure is not limited to the embodiments described above. Any variation, improvement, and replacement which do not depart from the essence of the present disclosure and which those skilled in the art are able to think of fall within the scope of the present disclosure.

## Claims

1. A flame retardant composition, comprising 40-60 parts by weight of phosphonate, 5-15 parts by weight of an organosilicon flame retardant, and 2-8 parts by weight of an inorganic silicon synergist,
wherein the phosphonate is prepared by a method comprising:
(1) condensing a compound represented by formula (I) such that some of the compounds form a polymer, giving a partially condensed product 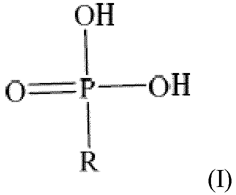 wherein R is selected one from the group consisting of a C1-C6 alkyl group, and a substituted or unsubstituted phenyl group; and
(2) reacting a rare earth inorganic salt with the partially condensed product to form the phosphonate.

2. The flame retardant composition according to claim 1, wherein the organosilicon flame retardant is selected one or more from the group consisting of a ladder-like siloxane, a caged silsesquioxane, and a silicone rubber; the inorganic silicon synergist is selected one or more from the group consisting of wollastonite, layered silicate, a silica nanoparticle, and a glass powder.

3. The flame retardant composition according to claim 1, wherein the inorganic silicon synergist is an inorganic silicon synergist modified by a silane coupling agent, and the silane coupling agent is a single-ended reactive polysiloxane coupling agent.

4. A method for preparing the flame retardant composition according to claim 1, comprising:
(1) condensing a compound represented by formula (I) in the presence of and an inorganic acid and acetic anhydride such that some of the compounds form a polymer, giving a partially condensed product 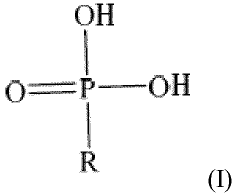 wherein R is selected one from the group consisting of a C1-C6 alkyl group, and a substituted or unsubstituted phenyl group;
(2) reacting a rare earth inorganic salt with the partially condensed product to form phosphonate; and
(3) mixing a raw material comprising 40-60 parts by weight of phosphonate, 5-15 parts by weight of an organosilicon flame retardant, and 2-8 parts by weight of an inorganic silicon synergist to form the flame retardant composition.

5. The method according to claim 4, wherein the molar ratio of the compound represented by formula (I) to acetic anhydride is (0.2-0.4): (0.1-0.3);
the mass ratio of the compound represented by formula (I) to the inorganic acid is 1: (1-5);
the molar ratio of the compound represented by formula (I) to the rare earth element in the rare earth inorganic salt is (0.2-0.4): (0.08-0.35).

6. The method according to claim 4, wherein step (1) is condensing a compound represented by formula (I) at 110-150 °C for 5-15 h in the presence of an inorganic acid and acetic anhydride;
step (2) is reacting a rare earth inorganic salt with the partially condensed product at 70-110 °C for 2-10 h.

7. A flame retardant masterbatch, comprising 25-40 parts by weight of first nylon and 50-75 parts by weight of the flame retardant composition according to any one of claims 1 to 3.

8. The flame retardant masterbatch according to claim 7, further comprising 0.5-5 parts by weight of a lubricant and 0.1-3 parts by weight of an antioxidant;
wherein the first nylon is obtained by polymerizing a diamine having 5 to 18 carbon atoms and a dibasic acid having 5 to 18 carbon atoms, or by polymerizing a polyamide having 5 to 15 carbon atoms;
the lubricant is selected one or more from the group consisting of aluminum stearate, lithium stearate, calcium stearate, magnesium stearate, a silicone powder, polyamide wax, Montan wax, ethylene bis stearamide, pentaerythritol stearate, and Lubricant TAF;
the antioxidant is selected one or more from the group consisting of a phenolic antioxidant, a phosphorus-based antioxidant, a thioether-based antioxidant, and a metal salt antioxidant.

9. A glass fiber-nylon composition, which is prepared from a raw material comprising 1-8 parts by weight of second nylon, 0.5-6 parts by weight of a glass fiber, and 0.5-5 parts by weight of the flame retardant masterbatch according to claim 7 or 8.

10. The glass fiber-nylon composition according to claim 9, wherein the raw material further comprises 0.1-2 parts by weight of an additive, and the additive is selected one or more from the group consisting of an antioxidant, a lubricant, a stabilizer, and a preservative.
